# EUROPEAN PATENT SPECIFICATION

(11) **EP 3 797 879 B1**
(45) Date of publication and mention of the grant of the patent: **23.02.2022**
(21) Application number: 20382843.9
(22) Date of filing: 24.09.2020
(51) Int. Cl.: B06B 1/02, B60Q 5/00, G10K 9/13

(54) **MULTIFUNCTION ACOUSTIC WARNING DEVICE**
MULTIFUNKTIONALE AKUSTISCHE WARNVORRICHTUNG
DISPOSITIF D'AVERTISSEMENT ACOUSTIQUE MULTIFONCTION

(30) Priority: 26.09.2019 ES 201931553 U
(43) Date of publication of application: 31.03.2021
(73) Proprietor: Clarton Horn, S.A.U., 23200 La Carolina (Jaén) (ES)
(72) Inventor: MINGUET GARCÍA, Enrique Quintiliano, 23200 La Carolina (Jaén) (ES)
(74) Representative: Herrero & Asociados, S.L.

(56) References cited:
- EP-A1- 3 427 845
- US-A1- 2012 182 137
- US-B2- 7 071 816

## Description

### OBJECT OF THE INVENTION

The present invention belongs to the field of acoustic warning devices, and more specifically to multifunction acoustic warning devices, which incorporate additional functions, allowing them to work both as a conventional acoustic warning device for automotive vehicles, and as a warning or alarm system.

The object of the present invention is a multi-function acoustic warning device, which besides allowing its operation as a conventional acoustic warning device, such as the horn of a vehicle, it is also allowed to work as an alarm system, generating different sounds in different conditions or situations, all with greater ease of integration and implementation with respect to current systems, reducing its wiring and consequently considerably facilitating its connection.

### BACKGROUND TO THE INVENTION

Currently, different models of acoustic warning devices are known, of the type included in automotive vehicles for the emission of an audible signal. These acoustic warning devices can also be used in other fields, where special attention or precaution is required from the user in the event of danger or emergency situations; or simply to incite the listeners to act in a certain way.

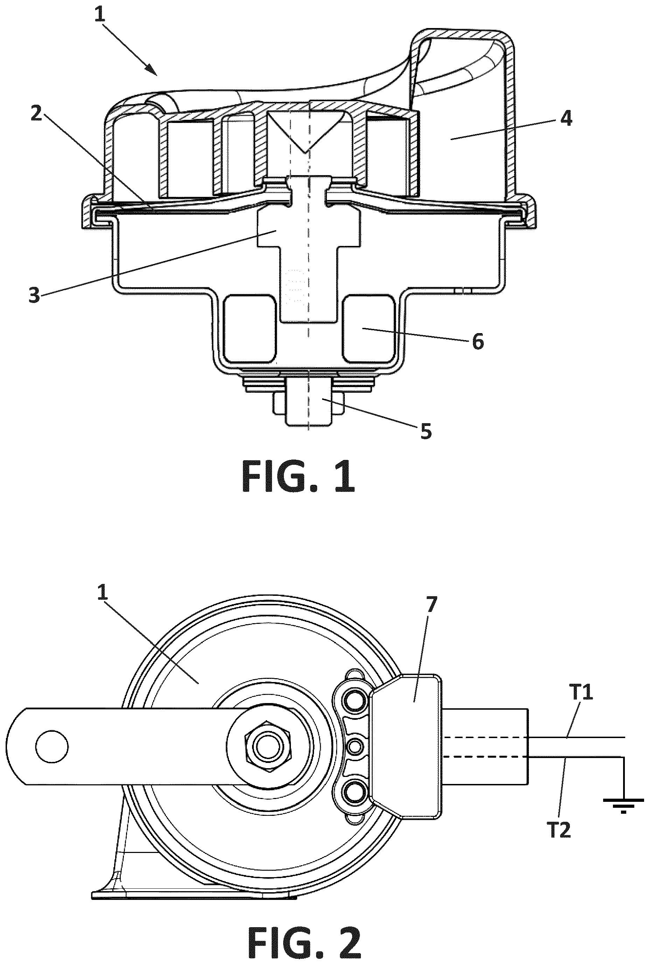

A conventional acoustic warning device (1), as shown in figure 1, is based on the generation of a sound pressure from the displacement of a membrane (2) which has a metal core in its centre, better known as the mobile core (3). This displacement causes a flow of air through a duct or tube (4), which amplifies it generating a sound pressure. In the case of a disc type acoustic warning device (1), the sound is generated when this membrane (2) moves and impacts the mobile core (3) with the fixed core (5) of the acoustic warning device (1).

In order to cause this displacement of the membrane (2), the acoustic warning device (1) has a coil (6), in a fixed position, through which an electric current is circulated, producing a magnetic field. This magnetic field displaces the moving core (3) in the direction of the axial axis shown in figure 1. In this way, the relative position between the mobile core (3) and the coil (6) varies, being already known in the state of the art that the maximum displacement of the mobile core (3) with respect to the coil (6) corresponds to the resonance frequency of the acoustic warning device (1), which is the optimum point of operation. In addition, it is known that the acoustic warning devices (1) with an electronic control circuit use a pulse generator to adjust the movement of the mobile core (3) and, therefore, to adjust the frequency and sound pressure of the sound generated by the acoustic warning device (1).

More specifically, "multifunction" acoustic warning devices are known, which incorporate additional functions and are capable of working both as a conventional acoustic warning device for motor vehicles (the classic car horn or whistle), as well as as a warning or alarm system that allows sounds to be generated in different conditions (such as the closing and/or opening of doors, proximity to other vehicles while driving or during parking manoeuvres, closing the vehicle with people inside it, etc.).

In this respect, US patent US6788188 B2 describes a multi-function acoustic warning device consisting of a microprocessor encapsulated within an electronic module that has three connection terminals. Two of these terminals are for carrying out the normal acoustic warning device function, while the third terminal is for receiving codes sent by the vehicle's own control unit. In this way, the microprocessor reads the codes it receives and generates an alarm signal. The alarm signal corresponding to each code is therefore defined in a software previously recorded in the control circuit of the electronic module of the multifunction warning device. Therefore, the architecture of this American patent has the disadvantage of requiring an additional output for the control unit, from which the voltage pulses are generated. It is also more sensitive to the multiple electromagnetic compatibility (EMC) interferences in a vehicle.

On the other hand, Spanish patent ES2586397 B1, corresponding to the same asignee of the present invention, also describes a multifunction acoustic warning device, which equally suffers from the same disadvantages as the American patent cited above, in particular, it requires up to four connection terminals, which makes the connection and installation of the system more complex, increasing the total costs of the warning device.

US patent application US2012/182137 A1 relates to a vehicle warning apparatus that prevents the decrease of the sound pressure level of the supersonic wave as well as securing the waterproof structure of the supersonic vibrator in the supersonic speaker.

In the current systems used in automotive vehicles, there is an electrical system for the acoustic warning device and another electrical system for the alarm/information device, such as a "*buzzer*". The voltage range for normal operation as an acoustic warning device (vehicle horn) is specified by regulations/customers.

In this respect, the range of operating voltages is a requirement specific to each vehicle/client and is reflected in their load books. Thus, customers specify a range of battery voltages for which the warning device must generate a minimum sound power. For example, a currently widely accepted battery voltage range for the operation of the warning device is 9V to 16V. Therefore, if when the connector is powered, it receives voltage within the operating range specified by the customer (typically 9V to 16V), the warning device must generate a horn sound, according to current regulations.

Considering the above, it has been detected that the current multifunction acoustic warning devices still have a series of disadvantages that could be improved, some of which are as follows:
- They are closed systems, which only generate pre-programmed sounds.
- The current multifunctional warning devices are limited to fixed frequencies previously programmed in their control circuits, corresponding to different codes, which are associated with a certain alarm signal. This means that the vehicle's control unit must send out pre-defined frequency signals so that the multi-function warning device generates a sound corresponding to each specific code.
- They have little operational flexibility, as they require certain values of their internal parameters (frequencies, times, temperatures, storage capacity, etc.), all of which limits their scope of application.
- The codes, being voltage pulses with determined durations, are susceptible to reach the connector distorted by electromagnetic compatibility (EMC) effects.
- Their connection is complex, as they include a plurality of terminals to be connected, making their integration and implementation more difficult.
- Because of the above points, the final costs are high.

### DESCRIPTION OF THE INVENTION

The present invention solves the above-mentioned problems by providing a multifunction acoustic warning device, which in addition to allowing it to function as a conventional acoustic warning device, such as a vehicle horn, also allows it to function as an alarm system, generating different sounds in the face of different conditions, events or situations that occur, such as the closing / opening of doors, the proximity of other vehicles, the closing of the vehicle with people inside it, etc., all with greater flexibility and greater ease of integration and implementation than current systems, also making it suitable for a wider field of application.

The present invention is based on a multi-function acoustic warning device, without double power supply, which has only two terminals for its connection to the control unit of a vehicle, having also an electronic circuit encapsulated in a connector which adjusts the frequency and pulse rate of the pulse generator which energizes the coil at the operating frequency. In this way, the acoustic warning device (1) is configured to work in normal warning mode and in alarm mode at different frequencies, without the need for additional connection terminals.

More specifically, the control system of the acoustic warning device described here comprises: a pulse generator, an electronic switching device, a signal processor configured to switch the coil by adjusting the parameters of the pulse generator; an A/D converter, for the conversion of an analogue voltage from the disconnected coil end to a digital voltage; and an electronic circuit for the measurement of operating variables.

In the case of normal operation of the acoustic warning device, the connector receives a voltage difference over its two connection terminals within a specified range, e.g. 9 to 16 V, so that the system functions as a normal acoustic warning device, the classic horn sound. With this action, the control system will adjust the pulse generator to the desired frequency and pulse rate for the signal that energizes the coil, this signal being set for standard operation of the acoustic warning device.

On the other hand, when the warning device is used for another function other than the normal or standard one for the warning device, a certain sequence for the connector's ignition will be carried out. The electronic circuit of the warning device will detect this information and a signal processor will adapt the frequency and rate of pulses of the signal that energizes the coil to the values transmitted in that ignition or special boot. In particular, by means of the present invention it is possible to energize the connector with a voltage outside the operating range for an acoustic warning device, for example, below the minimum (9V) or above the maximum allowed (16V). With this action, the electronic circuit of the multifunction warning device will know that it must work in "alarm mode" and, depending on the next voltage (or pulse train) received by the connector through the first terminal in the supply, the pulse generator will generate a certain pulse width modulated signal (PWM). This in turn will produce a certain alarm signal.

With the control system described in the present invention, the integration of the acoustic warning device is easier. The connector will only have two pins or connection terminals, reducing wiring in the vehicle and protection/switching elements in the vehicle. Furthermore, since the frequency and/or voltage values of the signal received by the acoustic warning device through the supply terminal will determine the operating frequency of the warning device, this makes its field of application much wider.

The following is a list of some of the main advantages and improvements obtained by the invention's multifunction acoustic warning device:
- Ability to generate a greater number of different sounds, with the possibility of varying both the tone and sound pressure of each signal during a single activation, as well as the ability to emit sounds that are the result of the combination of multiple tones.
- Automatic detection of new frames for the generation of new sounds, without the need of reprogramming
- Easier integration and implementation in the vehicle control circuits as less connection wires are required.
- Lower cost of the wiring system and the vehicle protection system.

### DESCRIPTION OF THE DRAWINGS

To complement the description that is being made and in order to help the better understanding of the characteristics of the invention, according to a preferential example of a practical implementation of it, it is accompanied as an integral part of that description, a set of drawings where with illustrative and not restrictive character, it has been represented the following:
Figure 1.- Shows a sectioned view of the internal mechanical components of a conventional acoustic warning device.
Figure 2.- Shows a side view of the invention's multifunction acoustic warning device, according to a first preferential realization, provided with two connection terminals.
Figure 3.- Shows a block diagram of the control circuit of the acoustic warning device of the invention with a negative switching system ("*Low Side*").
Figure 4.- Shows a block diagram of the acoustic warning device control circuit in this case with a positive switching system ("*High Side*").

### PREFERENTIAL REALIZATION OF THE INVENTION

Several examples of preferential implementation are described below, mentioning the figures cited above, without this limiting or reducing the scope of protection of this invention.

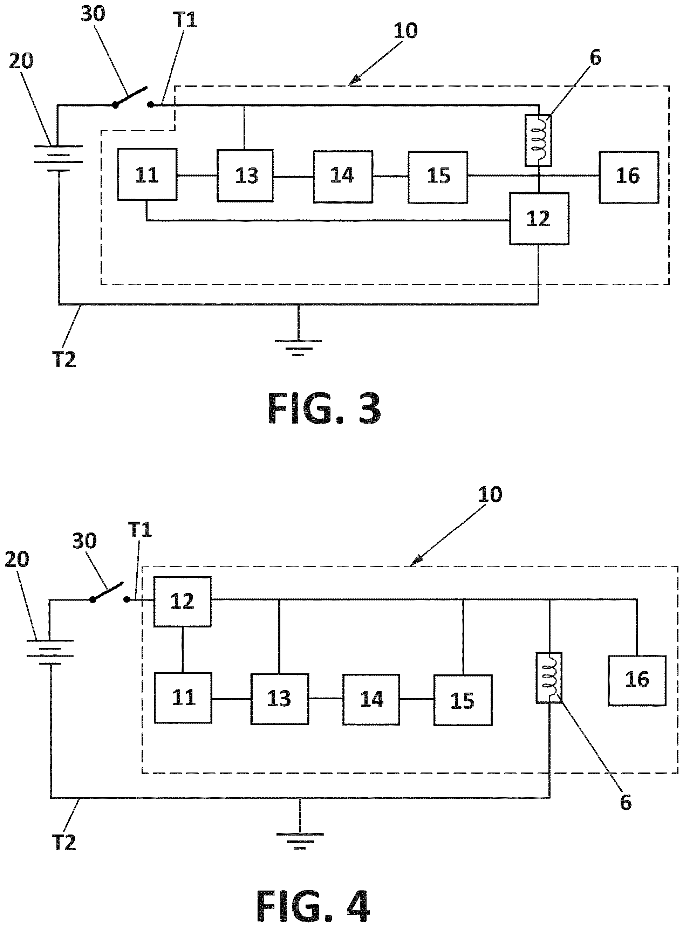

The acoustic warning device (1) of the invention comprises a series of mechanical elements, such as a movable membrane (2), a mobile core (3), a fixed core (5), a coil (6) and a connector (7) which has inside it an encapsulated control system (10), as shown in figures 3 and 4, where said control system (10) includes only two supply terminals (T1, T2) for the connection to a vehicle's control unit.

More specifically, in accordance with the preferential implementation shown in Figure 3, this control system (10) comprises
- a pulse generator (11),
- an electronic switching device (12) for disconnecting the coil (6),
- a signal processor (13) configured to switch the coil (6) by adjunting the parameters of the pulse generator (11);
- an A/D converter (14), for the conversion of an analogue voltage of the coil (6) into a digital voltage;
- an electronic circuit (15) for the measurement of operating variables; and
- an energy dissipation circuit (16) as a safety element, to avoid problems with overheating and electromagnetic compatibility (EMC).

Since the voltage and/or frequency of the pulse width modulated (PWM) signal received by the signal processor (13) through the first terminal (T1) will determine the operating frequency of the signal processor, this makes its field of application wider.

As it can operate without frequencies programmed for certain codes, as is the case of current systems, the acoustic warning device (1) will generate an alarm on any frequency transmitted from the vehicle's control unit by the first terminal (T1). This design is very useful, taking into account the diversity of platforms and customers in the automotive sector, as well as the great diversity of current applications that can be covered by the use of an acoustic warning device.

The design exposed in the present invention makes it possible to generate sounds in a very wide range of frequencies and sound powers, without the need to reprogram the control circuit.

Thus, in the case of normal operation of the acoustic warning device (1), the signal processor (13) will set the pulse generator (11) to the desired frequency and duty cycle in order to, via the electronic switching device (12), energise the coil (6) for standard operation of the acoustic warning device.

Figure 3 shows a block diagram of the control system (10) of the acoustic warning device (1) according to a first preferential implementation, where the connection/disconnection of the coil (6) is caused by the electronic switching device (12), this being installed "downstream" from the coil (6) and connected to the ground through the second terminal (T2), constituting a negative switching, perhaps better known by its English designation *"Low Side"*.

Figure 4 shows another block diagram of the control system (10) according to a second preferential implementation, where the connection/disconnection of the coil (6) is caused by the electronic switching device (12), this being installed "upstream" from the coil (6) and connected through the first terminal (T1) to the control system power supply input (10), constituting a positive switching, perhaps better known by its English designation *"High Side"*.

Therefore, figures 3 and 4 show different configurations of the control system (10) block diagram, where it is the type of coil switching that varies (6). Thus, both configurations can be connected to a power source (20), such as a vehicle battery, via an external switching device (30), such as the drive of a vehicle steering wheel.

## Claims

1. Multifunctional acoustic warning device (1) comprising a movable membrane (2), a mobile metal core (3), a fixed core (5), a coil (6) and a connector (7) which has an encapsulated control system (10) inside, where said control system (10) comprises a pulse generator (11), an electronic switching device (12) for the disconnection of the coil (6), a signal processor (13) configured to switch the coil (6) by adjusting parameters of the pulse generator (11), and an electronic circuit (15) for the measurement of operating variables;
the control system (10) having only two connection terminals (T1, T2) for its connection to a vehicle's control unit, such that the acoustic warning device (1) is configured to work in a normal warning mode and in an alarm mode at different frequencies, without the
need of additional connection terminals,
wherein in case of normal operation of the acoustic warning device (1), the pulse generator (11) is adjusted by the signal processor (13) to the desired frequency and duty cycle, in order to energise the coil (6) by means of the electronic switching device (12);
and wherein in the event of operation different from normal, the electronic circuit (15) of the acoustic warning device (1) is configured to detect that the acoustic warning device must work in the alarm mode,
**characterized in that** the control system (10) additionally comprises:
an A/D converter (14), for the conversion of an analogue voltage from a disconnected end of the coil (6) to a digital voltage;
and that the detecting that the acoustic warning device (1) must work in the alarm mode comprises detecting that it has been activated via the connector (7) by a voltage signal being outside a voltage range specified for said acoustic warning device (1);
and that, depending on the next voltage or pulse train received by the connector
(7) through the first terminal (T1) in a supply, the pulse generator (11) generates a certain pulse width modulated signal, PWM, producing in turn a certain alarm signal.

2. Multifunctional acoustic warning device (1) according to claim 1, **characterized in that** the control system (10) additionally comprises an energy dissipation circuit (16).

3. Multifunctional acoustic warning device (1) according to claim 1, **characterized in that** the electronic switching device (12) is installed "downstream" from the coil (6) and connected to earth via the second terminal (T2), constituting a negative switching.

4. Multifunctional acoustic warning device (1) according to claim 1, **characterized in that** the electronic switching device (12) is installed "upstream" of the coil (6) and connected via the first terminal (T1) to the control system power (10) supply input, constituting a positive switching.

## Patentansprüche

1. Multifunktionale akustische Warnvorrichtung (1), umfassend eine bewegliche Membran (2), einen beweglichen Metallkern (3), einen festen Kern (5), eine Spule (6) und einen Anschluss (7), der im Inneren ein gekapseltes Steuersystem (10) aufweist, wobei das Steuersystem (10) einen Impulsgenerator (11), eine elektronische Schalteinrichtung (12) zum Trennen der Spule (6), einen Signalprozessor (13), der dazu eingerichtet ist, die Spule (6) durch Einstellen von Parametern des Impulsgenerators (11) zu schalten, und einen elektronischen Schaltkreis (15) zur Messung von Betriebsgrößen umfasst;
wobei das Steuersystem (10) nur zwei Anschlussterminals (T1, T2) für seinen Anschluss an eine Steuerungseinheit eines Fahrzeugs aufweist, so dass die akustische Warnvorrichtung (1) dazu eingerichtet ist, in einem normalen Warnmodus und in einem Alarmmodus mit unterschiedlichen Frequenzen zu arbeiten, ohne dass zusätzliche Anschlussterminals erforderlich sind,
wobei im Fall des normalen Betriebs der akustischen Warnvorrichtung (1) der Impulsgenerator (11) durch den Signalprozessor (13) auf die gewünschte Frequenz und das gewünschte Tastverhältnis eingestellt wird, um die Spule (6) mittels der elektronischen Schalteinrichtung (12) zu erregen;
und wobei im Falle eines vom Normalbetrieb abweichenden Betriebs der elektronische Schaltkreis (15) der akustischen Warnvorrichtung (1) dazu eingerichtet ist, zu detektieren, dass die akustische Warnvorrichtung im Alarmmodus arbeiten muss,
**dadurch gekennzeichnet, dass** das Steuerungssystem (10) zusätzlich umfasst:
einen A/D-Wandler (14) für die Umwandlung einer analogen Spannung von einem nicht angeschlossenen Ende der Spule (6) in eine digitale Spannung;
und dass die Detektion, dass die akustische Warnvorrichtung (1) im Alarmmodus arbeiten muss, die Detektion umfasst, dass sie über den Anschluss (7) durch ein Spannungssignal aktiviert wurde, das außerhalb eines für die akustische Warnvorrichtung (1) spezifizierten Spannungsbereichs liegt;
und dass der Impulsgenerator (11) in Abhängigkeit von der nächsten, vom Anschluss (7) über das erste Terminal (T1) in einer Versorgung empfangenen Spannung oder Impulsfolge ein bestimmtes impulsbreitenmoduliertes Signal, PWM, erzeugt, das wiederum ein bestimmtes Alarmsignal erzeugt.

2. Multifunktionale akustische Warnvorrichtung (1) gemäß Anspruch 1, **dadurch gekennzeichnet, dass** das Steuersystem (10) zusätzlich eine Energiedissipationsschaltung (16) umfasst.

3. Multifunktionale akustische Warnvorrichtung (1) gemäß Anspruch 1, **dadurch gekennzeichnet, dass** die elektronische Schalteinrichtung (12) "stromabwärts" der Spule (6) installiert und über das zweite Terminal (T2) mit Erde verbunden ist, was eine negative Schaltung darstellt.

4. Multifunktionale akustische Warnvorrichtung (1) gemäß Anspruch 1, **dadurch gekennzeichnet, dass** die elektronische Schalteinrichtung (12) "stromaufwärts" der Spule (6) installiert ist und über das erste Terminal (T1) mit dem Stromversorgungseingang des Steuersystems (10) verbunden ist, was eine positive Schaltung darstellt.

## Revendications

1. Dispositif de signalisation acoustique multifonctionnel (1) comprenant une membrane amovible (2), un noyau métallique mobile (3), un noyau fixe (5), une bobine (6) et un connecteur (7) ayant un système de commande encapsulé (10) à l'intérieur, dans lequel ledit système de commande (10) comprend un générateur d'impulsions (11), un dispositif de commutation électronique (12) pour la déconnection de la bobine (6), un processeur de signal (13) configuré pour commuter sur la bobine (6) en ajustant des paramètres du générateur d'impulsions (11), et un circuit électronique (15) pour la mesure de variables de fonctionnement ;
le système de commande (10) ayant seulement deux terminaux de connexion (T1, T2) pour sa connexion à une unité de commande de véhicule, de sorte que le dispositif de signalisation acoustique multifonctionnel (1) soit configuré pour fonctionner dans un mode de signalisation normal et dans un mode d'alarme à différente fréquences, sans nécessiter de terminaux de connexion supplémentaires,
dans lequel en cas de fonctionnement normal du dispositif de signalisation acoustique (1), le générateur d'impulsions (11) est ajusté par le processeur de signal (13) à la fréquence et au rapport cyclique souhaités, dans le but d'alimenter la bobine (6) en énergie au moyen du dispositif de commutation électronique (12) ;
et dans lequel en cas de fonctionnement différent du fonctionnement normal, le circuit électronique (15) du dispositif de signalisation acoustique (1) est configuré pour détecter que le dispositif de signalisation acoustique doit fonctionner dans le mode d'alarme, **caractérisé en ce que** le système de commande (10) comprend en outre :
un convertisseur analogique-numérique (14), pour la conversion d'une tension analogique à partir d'une extrémité déconnectée de la bobine (6) en une tension numérique ;
et **en ce que** détecter que le dispositif de signalisation acoustique (1) doit fonctionner dans le mode d'alarme comprend détecter qu'il a été activé via le connecteur (7) par un signal de tension en dehors d'une plage de tension indiquée pour ledit dispositif de signalisation acoustique (1) ;
et que, selon la prochaine tension ou train d'impulsions reçus par le connecteur (7) à travers le premier terminal (T1) dans une alimentation, le générateur d'impulsions (11) génère une certain signal modulé en largeur d'impulsion, PWM, produisant en retour un certain signal d'alarme.

2. Dispositif de signalisation acoustique multifonctionnel (1) selon la revendication 1, **caractérisé en ce que** le système de commande (10) comprend en outre un circuit de dissipation d'énergie (16).

3. Dispositif de signalisation acoustique multifonctionnel (1) selon la revendication 1, **caractérisé en ce que** le dispositif de commutation électronique (12) est monté en aval de la bobine (6) et connecté à la terre via le deuxième terminal (T2), constituant une commutation négative.

4. Dispositif de signalisation acoustique multifonctionnel (1) selon la revendication 1, **caractérisé en ce que** le dispositif de commutation électronique (12) est monté en amont de la bobine (6) et connecté via le premier terminal (T1) à l'entrée d'alimentation du système de commande (10), constituant une commutation positive.
